Europäisches Patentamt

European Patent Office

Office européen des brevets

(19)

(11) Numéro de publication : **0 518 780 A2**

(12) # DEMANDE DE BREVET EUROPEEN

(21) Numéro de dépôt : **92401638.9**

(22) Date de dépôt : **12.06.92**

(51) Int. Cl.$^5$ : **B23K 26/02, B23K 26/00**

(30) Priorité : **13.06.91 FR 9107240**

(43) Date de publication de la demande :
**16.12.92 Bulletin 92/51**

(84) Etats contractants désignés :
**BE DE ES**

(71) Demandeur : **FRAMATOME**
**Tour Fiat 1, Place de la Coupole**
**F-92400 Courbevoie (FR)**

(72) Inventeur : **Griffaton, Jacques**
**6, rue Saint-Georges**
**F-71100 Chalon-sur-Saone (FR)**

(74) Mandataire : **Moncheny, Michel et al**
**c/o Cabinet Lavoix 2 Place d'Estienne d'Orves**
**F-75441 Paris Cedex 09 (FR)**

(54) **Procédé et dispositif de contrôle du fonctionnement d'une chaîne optique, pour faisceau laser, portée par un outil de soudage.**

(57) Selon ce procédé on effectue le contrôle du fonctionnement optique d'un outil de soudage à faisceau laser, lorsque l'outil est dans une position hors service, au moyen d'un rayonnement auxiliaire de faible puissance. Ce rayonnement est envoyé sur un dispositif de mesure (64) muni d'une cellule photoélectrique (86) après avoir traversé l'outil jusqu'à une tête de soudage (58).

Application au contrôle d'une chaîne optique portée par une canne de soudage utilisée pour le soudage de manchons de réparation dans des tubes de générateur de vapeur de réacteur nucléaire à eau sous pression.

FIG.2

EP 0 518 780 A2

La présente invention concerne un procédé et un dispositif de contrôle du fonctionnement d'une chaîne optique portée par un outil de soudage.

On connait déjà dans l'état de la technique un procédé de contrôle du fonctionnement d'une chaîne optique portée par un outil de soudage et conduisant un faisceau laser de soudage, à une puissance opérationnelle, depuis une source laser jusqu'à un emplacement de soudage.

Il est connu d'utiliser un outil de soudage comme une canne de soudage à faisceau laser pour des opérations de soudage dans des espaces réduits, notamment dans les tubes d'un générateur de vapeur de réacteur nucléaire refroidi par de l'eau sous pression. Ces générateurs de vapeur comportent un faisceau constitué d'un grand nombre de tubes de petit diamètre ( 20 mm environ), pliés en U et fixés à chacune de leurs extrémités par sertissage dans une plaque tubulaire de grande épaisseur. La partie du générateur de vapeur située en dessous de la plaque tubulaire délimite une boîte à eau où débouchent les extrémités des tubes du faisceau. Les contraintes auxquelles sont soumis les tubes produisent parfois des fissures dans les parois de ces tubes. Il est connu d'effectuer la réparation de ces tubes par manchonnage des tubes. Dans ce but, on fixe des manchons de réparation dans les tubes par soudage, au moyen d'une canne de soudage à faisceau laser qui est introduite dans la boîte à eau et dans les tubes.

Le document FR-A-89 08 635 de la demanderesse montre un ensemble de soudage, comportant une canne de soudage à faisceau laser, qui est utilisée pour effectuer le manchonnage de tubes d'un générateur de vapeur et qui est disposée à l'intérieur de la boîte à eau du générateur.

La canne de soudage comporte une chaîne optique qui comprend essentiellement une fibre optique conduisant le faisceau laser le long de la canne, depuis une source laser, disposée à l'extérieur de la boîte à eau, jusqu'à une tête de soudage de la canne, et des moyens optiques, disposés dans cette tête, adaptés pour focaliser le faisceau laser sur un emplacement de soudage.

Pour effectuer les opérations de soudage dans de bonnes conditions, on contrôle le fonctionnement optique de la canne de soudage et on s'assure de la bonne transmission de la puissance du faisceau laser dans la chaîne optique de la canne. Pour cela, on mesure généralement la puissance émise à la sortie de la source laser avant l'entrée du faisceau dans la fibre optique. La mesure de la puissance en sortie de la fibre optique ou en sortie de la tête de soudage requiert une place suffisante pour disposer des moyens de prélèvement du faisceau et des moyens de mesure de la puissance du faisceau. Dans le cas d'opération de soudage à l'intérieur des tubes d'un générateur de vapeur, il n'y a pas de place suffisante pour insérer de tels moyens. Par ailleurs, l'extraction de la canne de soudage hors de la boîte à eau, par exemple en vue d'effectuer une mesure de puissance du faisceau, nuit à la cadence de travail et au matériel.

L'invention a pour but de déceler les défauts ou la dégradation de la chaîne optique portée par un outil de soudage, notamment une canne de soudage utilisée dans des espaces réduits, afin de s'assurer de la bonne transmission de la puissance du faisceau laser de soudage, ceci avec des moyens de mesure peu encombrants.

A cet effet, l'invention a pour objet un procédé de contrôle du type précité caractérisé en ce que, entre deux opérations de soudage :

- on déplace l'outil de soudage d'une position opérationnelle au niveau de l'emplacement de soudage jusqu'à une position hors service ;
- on alimente la chaîne optique de l'outil de soudage avec un rayonnement optique auxiliaire ayant une puissance inférieure à la puissance opérationnelle du faisceau laser ;
- on mesure l'intensité lumineuse émise par l'outil de soudage, dans sa position hors service, alimenté par le rayonnement optique auxiliaire ;
- on compare cette intensité avec un seuil d'intensité correspondant au fonctionnement satisfaisant de l'outil de soudage ; et
- on déplace l'outil de soudage vers une nouvelle position opérationnelle de soudage.

Suivant d'autres caractéristiques de l'invention:
- le rayonnement optique auxiliaire est émis par un laser Hélium-Néon utilisé pour visualiser le faisceau laser invisible, lorsque celui-ci est opérationnel ;
- le rayonnement optique auxiliaire est émis par le laser de soudage, réglé à une puissance inférieure à la puissance opérationnelle ;
- le rayonnement optique auxiliaire est émis par une diode électroluminescente à une longueur d'onde adaptée à sa transmission dans la chaîne optique de l'outil de soudage ;
- le rayonnement émis par la diode électroluminescente a une longeur d'onde égale à la longueur d'onde du laser de soudage ;
- le laser et la diode électroluminescente émettent à une longueur d'onde identique de 1,06 microns.

L'invention a également pour objet le procédé précité appliqué au contrôle d'une chaîne optique portée par une canne de soudage utilisée pour le manchonnage d'un faisceau de tubes d'un générateur de vapeur d'un réacteur nucléaire à eau sous pression, la canne de soudage ayant une tête de soudage qui est introduite dans les tubes, par leurs extrémités débouchant dans une boîte à eau du générateur, pour parvenir jusqu'à sa position opérationnelle, et qui est extraite des tubes pour être déplacée dans la boîte à eau, caractérisé en ce qu'on mesure l'intensité lumineuse émise par la canne alimentée par le rayonnement optique auxiliaire pendant le déplacement, dans la boîte à eau, de la tête de soudage entre une position de la tête alignée avec un premier tube qui vient d'être manchonné et une position de la tête alignée avec un second tube que l'on va manchonner.

Un autre objet de l'invention est un dispositif de contrôle pour la mise en oeuvre du procédé précité, caractérisé en ce qu'il comporte un moyen de mesure comprenant une cellule photoélectrique et un ensemble optique qui est disposé par rapport à l'outil de soudage de façon à focaliser sur cette cellule le rayonnement auxiliaire émis par l'outil de soudage en position hors service.

Ce dispositif est appliqué au contrôle d'une chaîne optique portée par une canne de soudage utilisée pour le manchonnage de tubes d'un générateur de vapeur d'un réacteur nucléaire à eau sous pression, la canne de soudage étant portée par un bâti qui est fixé sur un porteur, disposé à l'intérieur d'une boîte à eau du générateur, et qui comporte des moyens de déplacement de la canne entre sa position opérationnelle et sa position hors service, caractérisé en ce que le moyen de mesure d'intensité lumineuse est disposé sur le bâti de façon à recevoir le rayonnement optique auxiliaire émis par la canne de soudage, en position hors service de celle-ci.

Un exemple de réalisation de l'invention est décrit plus en détail ci-dessous en se référant aux dessins annexés dans lesquels :

- la figure 1 est une vue schématique en coupe et en élévation de la partie inférieure d'un générateur de vapeur d'un réacteur nucléaire dans lequel est placé un dispositif de contrôle pour la mise en oeuvre du procédé selon l'invention ;

- la figure 2 est une vue schématique en coupe longitudinale d'une partie de la tête de soudage de la canne de soudage ; et

- la figure 3 est une vue schématique en perspective d'un outil de soudage.

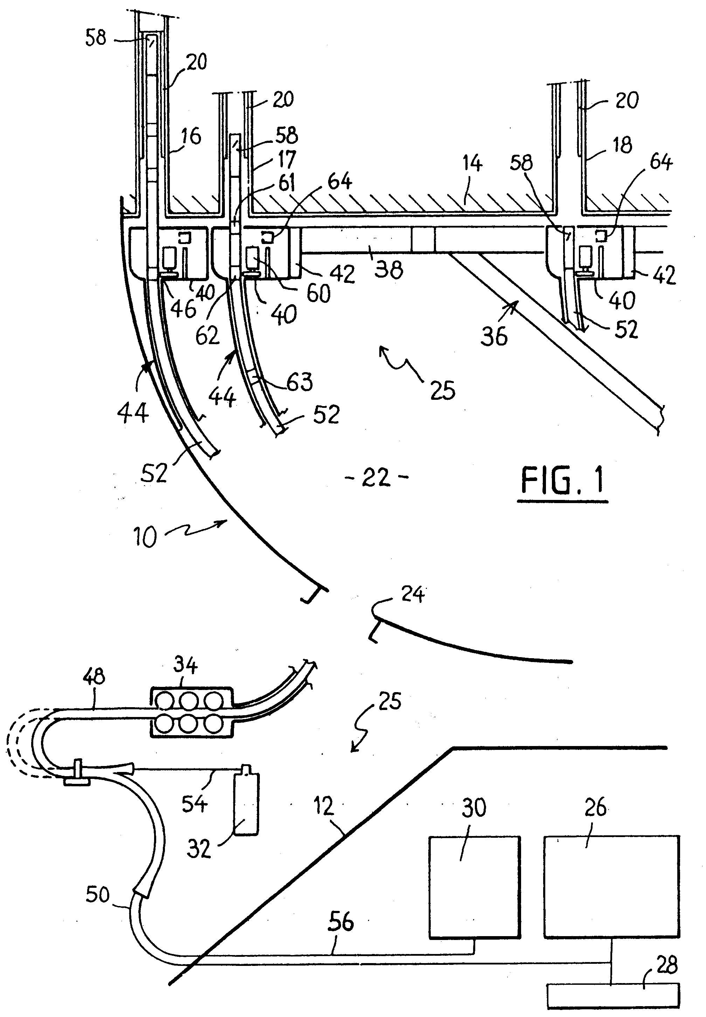

On voit à la figure 1 un générateur de vapeur 10 disposé à l'intérieur d'un bâtiment de réacteur nucléaire délimité par une paroi 12 qui sépare l'intérieur de l'extérieur du bâtiment.

Le générateur de vapeur 10 comporte une plaque tubulaire 14 où sont fixées par sertissage les extrémités des tubes d'un faisceau pliés en U. Sur la figure on a représenté des extrémités de trois tubes 16,17,18 seulement, dans chacun desquels on a disposé un manchon de réparation 20. Les extrémités des tubes débouchent dans une boîte à eau 22 munie d'un trou d'homme 24.

On a également représenté sur la figure 1 un dispositif de soudage au laser 25 des manchons de réparation 20. Ce dispositif de soudage comprend :

- à l'extérieur du bâtiment de réacteur nucléaire, une source laser 26, une source de rayonnement auxiliaire 28, et une armoire d'alimentation électrique 30 ;

- dans le bâtiment de réacteur nucléaire mais à l'extérieur de la boîte à eau 22 du générateur de vapeur, une source de gaz neutre ou actif 32 et un tireur-pousseur à galets 34;

- dans la boîte à eau 22, un porteur 36 muni d'un bras 38 qui porte un bâti 40 à son extrémité, par l'intermédiaire d'un élévateur 42.

Le dispositif de soudage au laser comprend en outre un tube souple 44, appelé boa, qui s'étend d'une ouverture inférieure 46 du bâti 40 au tireur-pousseur 34, en traversant le trou d'homme 24 de la boîte à eau. Une gaine 48 passe dans ce boa et contient une fibre optique gainée 50 reliée à la source laser 26 et à la source de rayonnement auxiliaire 28. La gaine 48 constitue le prolongement arrière d'un outil de soudage appelé canne de soudage 52 où passe également la fibre optique 50. Le boa 44 contient en outre une conduite de gaz 54, alimentée par la source de gaz 32, et des câbles électriques 56 provenant de l'armoire électrique 30.

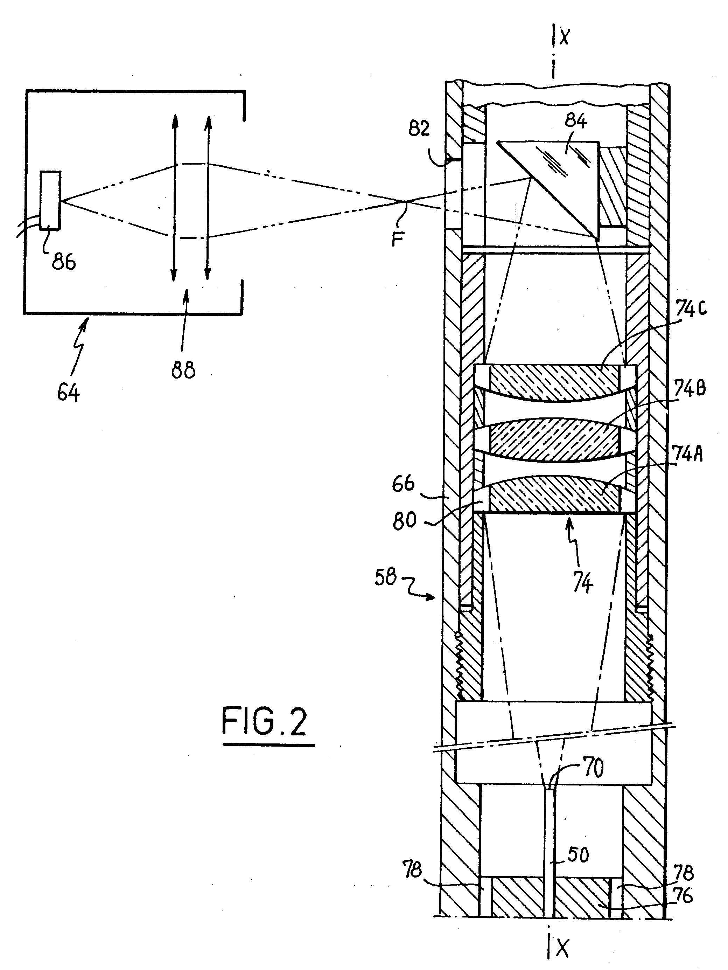

La canne de soudage 52 conduit le faisceau laser depuis la source laser 26 jusqu'à son extrémité distale comprenant une tête de soudage rotative 58, qui est montrée plus en détail à la figure 2 et qui sera décrite ultérieurement.

La canne de soudage 52 traverse le bâti 40. Elle est munie de moyens de déplacement axial à l'intérieur des tubes 16,17,18, constitués en particulier par le tireur-pousseur 34, et de moyens de déplacement en rotation qui comprennent un moteur 60, disposé dans le bâti 40, et des éléments 61,62,63 d'entraînement en rotation de la canne. Ces moyens sont de type connu et sont décrits plus en détail dans le document FR-A 89 08 635 de la demanderesse. La rotation de la canne de soudage 52 permet d'effectuer des cordons de soudure circulaires. La canne de soudage est déplacée horizontalement dans la boîte à eau, en considérant la figure 1, entre deux tubes à manchonner, au moyen du porteur 36.

On a représenté à la figure 1 la canne de soudage 52 dans deux positions opérationnelles de soudage, à gauche de la figure, et dans une troisième position hors service, à droite de la figure. Les deux positions opérationnelles de soudage correspondent respectivement à des emplacements de soudage disposés en haut et en bas du manchon de réparation 20. La troisième position hors service permet le déplacement horizontal de la canne de soudage 52 entre deux tubes à manchonner. On voit que, dans cette position hors service de la canne de soudage, la tête de soudage est en regard d'un dispositif de mesure d'intensité lumineuse 64 disposé à l'intérieur du bâti 40.

La figure 2 montre plus en détail la tête de soudage 58 de la canne de soudage positionnée en regard du dispositif de mesure 64. La tête de soudage 58 est délimitée par une paroi 66 de forme générale tubulaire à l'intérieur de laquelle est disposée l'extrémité distale 70 de la fibre optique 50. Cette fibre optique émet un faisceau en direction d'un ensemble de lentilles 74, comprenant deux à trois lentilles juxtaposées 74A,74B,74C pour collimater et focaliser le faisceau. La fibre optique 50 est portée par un manchon 76 de façon à être positionnée suivant l'axe X-X de la tête de soudage 58. Le manchon 76 comporte des rainures périphériques longitudinales 78 formant des passages pour le gaz neutre ou actif, utilisé pour les opérations de soudage et provenant de la source de gaz 32. Dans le même but, les lentilles 74A,74B,74C comportent des encoches latérales 80, ou bien, peuvent être supportées par des fourreaux et entretoises ajourées (non représentés).

Le faisceau focalisé par l'ensemble de lentilles 74 est renvoyé radialement par un miroir 84, incliné à 45°, vers l'extérieur de la tête de soudage, à travers une fenêtre latérale 82 de celle-ci.

La fibre optique 50, l'ensemble de lentilles 74 et le miroir 84 constituent une chaîne optique qui, lorsque la tête de soudage est en position opérationnelle, transmet le faisceau laser opérationnel jusqu'à un emplacement de soudage qui coïncide avec le point de focalisation F du faisceau, à l'extérieur de la tête de soudage. Dans le cas où la canne de soudage est en position hors service, comme cela est représenté à la figure 2, le faisceau laser n'est plus opérationnel et l'on effectue un contrôle du fonctionnement optique de la canne. Pour cela, la canne de soudage est alimentée par le rayonnement de la source auxiliaire 28 qui est transmis jusqu'au dispositif de mesure 64 par la chaîne optique décrite précédemment. Le rayonnement auxiliaire émis radialement par la tête de soudage est capté par le dispositif de mesure 64 au-delà du point de focalisation F. Ce rayonnement auxiliaire a une puissance faible, par rapport à la puissance opérationnelle du faisceau laser, qui est adaptée aux conditions d'utilisation du dispositif de mesure 64.

Différentes sources de rayonnement auxiliaire peuvent être utilisées, par exemple un laser Hélium-Néon utilisé par ailleurs pour visualiser le faisceau laser invisible, lorsque celui-ci est opérationnel. Une autre source de rayonnement auxiliaire possible est une diode électroluminescente qui émet un rayonnement de longueur d'onde adaptée à la transmission dans la chaîne optique de la canne de soudage. Dans ce cas, on peut utiliser une diode électroluminescente émettant dans une longueur d'onde identique à celle du laser de soudage, par exemple, égale à 1,06 microns, qui est la longueur d'onde d'un laser YAG utilisé habituellement pour le soudage. Il est également possible d'utiliser comme source de rayonnement auxiliaire le laser de soudage, réglé à une puissance inférieure à sa puissance opérationnelle.

Le dispositif de mesure 64 comporte une cellule photoélectrique 86 et un ensemble optique 88 de deux lentilles qui focalise sur cette cellule le rayonnement auxiliaire émis par la canne de soudage. La cellule photoélectrique 86 convertit le rayonnement reçu en un signal électrique. Pour déceler un défaut ou la détérioration éventuelle de la chaîne optique, on compare le signal délivré par la cellule photoélectrique à un seuil prédéterminé, qui est fonction de l'état des éléments constituant la chaîne optique.

Le contrôle de la chaîne optique de la canne de soudage est réalisé séquentiellement entre deux opérations de soudage qui s'enchaînent de la façon suivante :

- on positionne la tête de soudage au regard d'un emplacement de soudage à l'intérieur d'un manchon de réparation 20 d'un tube et on effectue les soudures nécessaires pour fixer celui-ci ;
- une fois le manchon 20 fixé, on déplace verticalement la tête de soudage vers le bas, en considérant la figure 1, entre sa position opérationnelle de soudage et une position hors service telle que la tête de soudage soit escamotée dans le bâti 40, à la hauteur du dispositif de mesure 64, en étant alignée axialement avec le tube qu'on a terminé de manchonner ;
- pendant le déplacement horizontal de la canne de soudage vers un autre tube à manchonner, on alimente la chaîne optique de la canne avec le rayonnement optique auxiliaire, on fait tourner la tête de soudage 58 de façon à orienter le rayonnement émis à travers la fenêtre 82 de la tête face au dispositif de mesure 64, on mesure le signal délivré par la cellule photoélectrique 86, et on compare ce signal électrique avec le seuil prédéterminé correspondant au fonctionnement satisfaisant de la canne ;
- lorsque la tête de soudage est au droit d'un autre tube à manchonner, on déplace verticalement celle-ci vers le haut, en considérant la figure 1, entre sa position hors service et une position opérationnelle telle que la tête de soudage soit en regard d'un emplacement de soudage à l'intérieur d'un manchon de réparation 20.

La surveillance du signal délivré par la cellule photoélectrique 86 du dispositif de mesure permet de déceler un défaut ou une éventuelle dégradation de la chaîne optique de la canne de soudage. On vérifie ainsi la qualité des opérations de soudage que l'on vient d'effectuer et on s'assure du bon fonctionnement de la canne pour les prochaines opérations de soudage.

Le contrôle séquentiel de la chaîne optique de la canne de soudage est réalisé sans extraire la canne de soudage de la boîte à eau du générateur et pendant le déplacement de la canne entre deux tubes à manchonner.

La source de rayonnement auxiliaire étant de faible puissance, le dispositif de mesure d'intensité du rayonnement émis par la canne de soudage, lorsqu'elle est hors service, est peu encombrant ce qui permet de le loger dans le bâti, contenu dans la boîte à eau.

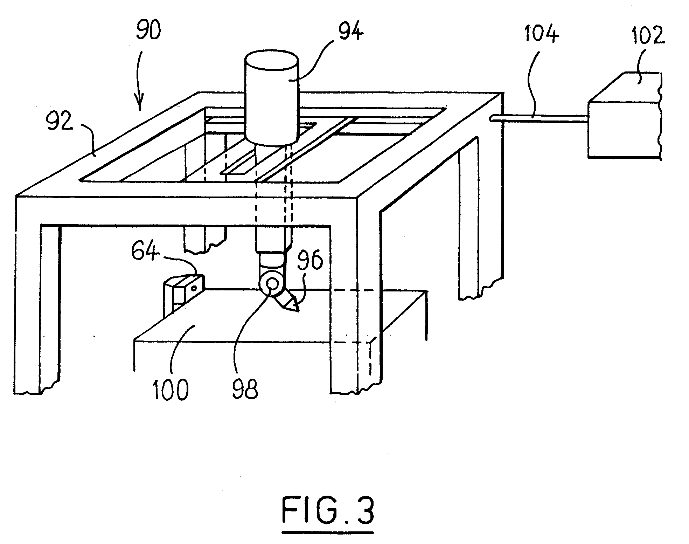

On voit à la figure 3 comment le procédé de contrôle selon l'invention est appliqué à un autre outil de soudage à faisceau laser que la canne de soudage. On voit sur cette figure un outil de soudage 90 comprenant un portique 92 portant un bras de soudage 94 qui est muni d'une tête de soudage 96 montée articulée sur un poignet 98. L'outil de soudage 90 est utilisé pour le soudage d'objets agencés sur une table 100. Un boîtier 102 contient une source laser qui émet un faisceau de soudage. Celui-ci est conduit à travers le portique 92 et le bras 94 jusqu'à la tête de soudage 96 au moyen d'une chaîne optique, de type connu, comprenant une fibre optique 104 et/ou des miroirs (non représentés).

On voit également à la figure 3 que pour effectuer le contrôle de la chaîne optique de l'outil de soudage 90 on a disposé le dispositif de mesure d'intensité lumineuse 64 au voisinage de la table 100. La source de rayonnement auxiliaire est logée, par exemple, à l'intérieur du boîtier 102. L'outil de soudage 90 comporte des moyens connus de déplacement de sa tête de soudage 96 entre une position opérationnelle et une position hors service dans laquelle la tête 96 émet le rayonnement auxiliaire, transmis par la chaîne optique, vers le dispositif de mesure 64.

## Revendications

1. Procédé de contrôle du fonctionnement d'une chaîne optique portée par un outil de soudage et conduisant un faisceau laser de soudage, à une puissance opérationnelle, depuis une source laser (26) jusqu'à un emplacement de soudage, caractérisé en ce que, entre deux opérations de soudage:
    - on déplace l'outil de soudage (52) d'une position opérationnelle au niveau de l'emplacement de soudage jusqu'à une position hors service ;
    - on alimente la chaîne optique de l'outil de soudage (52) avec un rayonnement optique auxiliaire ayant une puissance inférieure à la puissance opérationnelle du faisceau laser ;
    - on mesure l'intensité lumineuse émise par l'outil de soudage (52), dans sa position hors service, alimenté par le rayonnement optique auxiliaire ;
    - on compare cette intensité avec un seuil d'intensité correspondant au fonctionnement satisfaisant de l'outil de soudage (52) ; et
    - on déplace l'outil de soudage (52) vers une nouvelle position opérationnelle de soudage.

2. Procédé selon la revendication 1, caractérisé en ce que le rayonnement optique auxiliaire est émis par un laser Hélium-Néon utilisé pour visualiser le faisceau laser invisible, lorsque celui-ci est opérationnel.

3. Procédé selon la revendication 1, caractérisé en ce que le rayonnement optique auxiliaire est émis par le laser de soudage, réglé à une puissance inférieure à la puissance opérationnelle.

4. Procédé selon la revendication 1, caractérisé en ce que le rayonnement optique auxiliaire est émis par une diode électroluminescente à une longueur d'onde adaptée à sa transmission dans la chaîne optique de l'outil de soudage (52).

5. Procédé selon la revendication 4, caractérisé en ce que le rayonnement émis par la diode électroluminescente a une longueur d'onde égale à la longueur d'onde du laser de soudage.

6. Procédé selon la revendication 5, caractérisé en ce que le laser et la diode électroluminescente émettent à une longueur d'onde identique de 1,06 microns.

7. Procédé selon l'une quelconque des revendications précédentes appliqué au contrôle d'une chaîne optique portée par une canne de soudage (52) utilisée pour le manchonnage d'un faisceau de tubes d'un générateur de vapeur (10) d'un réacteur nucléaire à eau sous pression, la canne de soudage (52) ayant une tête de soudage (58) qui est introduite dans les tubes (16,17,18), par leurs extrémités débouchant dans une boîte à eau (22) du générateur, pour parvenir jusqu'à sa position opérationnelle, et qui est extraite des tubes (16,17,18) pour être déplacée dans la boîte à eau, caractérisé en ce qu'on mesure l'intensité lumineuse émise par la canne (52) alimentée par le rayonnement optique auxiliaire pendant le déplacement, dans la boîte à eau, de la tête de soudage (58) entre une position de la tête alignée avec un premier tube (16,17,18) qui vient d'être manchonné et une position de la tête alignée avec un second tube (16,17,18) que l'on va manchonner.

8. Dispositif de contrôle pour la mise en oeuvre du procédé selon l'une quelconque des revendications précédentes, caractérisé en ce qu'il comporte un moyen de mesure (64) comprenant une cellule photoélectrique (86) et un ensemble optique (88) qui est disposé par rapport à l'outil de soudage de façon à focaliser sur cette cellule le rayonnement auxiliaire émis par l'outil de soudage (52) en position hors service.

9. Dispositif selon la revendication 8 appliqué au contrôle d'une chaîne optique portée par une canne de soudage (52) utilisée pour le manchonnage de tubes (16,17,18) d'un générateur de vapeur (10) d'un réacteur nucléaire à eau sous pression, la canne de soudage (52) étant portée par un bâti (40) qui est fixé sur un porteur (36), disposé à l'intérieur d'une boîte à eau (22) du générateur, et qui comporte des moyens de déplacement (34,60) de la canne entre sa position opérationnelle et sa position hors service, caractérisé en ce que le moyen de mesure d'intensité lumineuse (64) est disposé sur le bâti (40) de façon à recevoir le rayonnement optique auxiliaire émis par la canne de soudage (52), en position hors service de celle-ci.

FIG. 1

FIG.2

FIG.3